# EUROPEAN PATENT SPECIFICATION

(11) **EP 4 439 130 B1**
(45) Date of publication and mention of the grant of the patent: **28.10.2026**
(21) Application number: 22895723.9
(22) Date of filing: 21.11.2022
(51) Int. Cl.: G01W 1/14, G01B 21/04, G01B 21/18, G08B 19/02

(54) **PILING SNOW DEPTH MEASUREMENT SYSTEM**
SYSTEM ZUR MESSUNG DER SCHNEEHÖHE
SYSTÈME DE MESURE DE LA HAUTEUR DE LA NEIGE ACCUMULÉE

(30) Priority: 22.11.2021 JP 2021189184
(43) Date of publication of application: 02.10.2024
(73) Proprietor: Yamada Giken Co., Ltd., Fukui City, Fukui 918-8015 (JP)
(72) Inventor: YAMADA, Tadayuki, Fukui City, Fukui 9188015 (JP)
(74) Representative: Vossius & Partner Patentanwälte Rechtsanwälte mbB
(86) International application number: PCT/JP2022/043001
(87) International publication number: WO 2023/090442

(56) References cited:
- JP-A- H05 323 047
- JP-A- S55 138 676
- JP-A- S55 138 676
- US-A1- 2005 047 864
- US-A1- 2020 340 914
- YUJI TAKIMOTO, AKIRA OGURA, TADASHI YOSHIDA, KEIJI TAKASE, RISUKE MARUYAMA: "Transactions of the Japanese Society of Irrigation, Drainage and Rural Engineering", PUBLISHER JAPANESE SOCIETY OF IRRIGATION, DRAINAGE AND RURAL ENGINEERING, vol. 82, no. 4(292), August 2014 (2014-08-01), JP , pages 191 - 200, XP009545663, DOI: 10.11408/jsidre.82.191
- MEHROTRA RAVI, KUMAR DEEPAK: "Patterns in Melting Snow and Vapor Deposited Layers", PHYSICAL REVIEW LETTERS, AMERICAN PHYSICAL SOCIETY, US, vol. 92, no. 25, 1 June 2004 (2004-06-01), US , XP093067496, ISSN: 0031-9007, DOI: 10.1103/PhysRevLett.92.254502

## Description

### TECHNICAL FIELD

The present invention relates to a system for measuring piling snow depth.

### BACKGROUND ART

Patent Document 1 discloses a road surface sensor including a non-contact piling snow depth measurement instrument.
Patent Document 2 discloses to supply electric power to an electric heating element so as to maintain a surface temperature of a snow receiving board at -0 degrees Celsius, and to find out a quantity of heat for melting snow from the supplied electrical energy.
Patent Document 3 discloses to supply electric power to an electric heating element so as to maintain a surface temperature of a simulated road surface material at a predetermined temperature, and compute a quantity of heat naturally supplied from the roadbed, based on the supplied electrical energy and a temperature of an actual road surface.
US 2005/0047864 A1 discloses a road surface sensor and a monitoring control method for a road surface.

### Prior Art Documents

### Patent Literature

[Patent Document 1] JP 2005-069699 A
[Patent Document 2] JP H08-27713 A
[Patent Document 3] JP 2006-083633 A

### SUMMARY OF THE INVENTION

### Technical Problem

Snow piling up on a runway of an airfield hinders airplanes from taking off and landing on.
For this reason, snow removal begins when piling snow depth exceeds a predetermined threshold value, e.g., 5cm.
Since the non-contact piling snow depth measurement instrument disclosed in Patent Document 1 requires to install equipment above the ground, it can be installed only in a location away from the runway in order to prevent it from coming into contact with airplanes traveling on the runway.
The technique disclosed in Patent Document 2 enables to find out the energy to be supplied to the electric heating element for melting snow. However, the energy consumed at the electric heating element is not equal to the heat of fusion of the piling snow, because of the influence of geothermal heat, solar radiation, radiative cooling, or others. Even if the heat of fusion of the piling snow is known, what can be found out from it is mass of the piling snow. Density of the piling snow differs depending on weather or others. Thus, the volume of the piling snow cannot be found out without knowing the density of the piling snow. Therefore, the piling snow depth cannot be found out.

### Solution to Problem

A piling snow depth measurement system includes at least two heat quantity measurement apparatuses, a piling snow depth measurement apparatus, and a control apparatus. Each of the heat quantity measurement apparatuses includes a snow receiving plate configured that falling snow piles up thereon, a heater device configured to heat the snow receiving plate until a temperature of the snow receiving plate becomes a predetermined target temperature exceeding 0 degrees Celsius, and a heat flux density measurement apparatus configured to measure heat flux density transmitted from below to the snow receiving plate. A first heat quantity measurement apparatus of the heat quantity measurement apparatuses is installed within a first location. A second heat quantity measurement apparatus of the heat quantity measurement apparatuses is installed within a second location. The piling snow depth measurement apparatus measures a piling snow depth of snow piling up at the first location. The control apparatus computes a quantity of heat spent to melt snow falling on the snow receiving plate, for each of the heat quantity measurement apparatuses, based on energy consumed by the heater device and a heat flux density measured by the heat flux density measurement apparatus. The control apparatus estimates a piling snow depth at the second location, based on the computed quantity of heat and the piling snow depth measured by the piling snow depth measurement apparatus.

### Advantageous Effects of the Invention

The piling snow depth measurement system enables accurate measurement of the piling snow depth at the second location without installing any equipment above the ground within the second location.

### BRIEF DESCRIPTION OF DRAWINGS

FIG. 1 is a plan view showing an example of a piling snow depth measurement system;
FIG. 2 is a plan view showing an example of a heat quantity measurement apparatus;
FIG. 3 is a III-III cross-sectional view showing the heat quantity measurement apparatus;
FIG. 4 is an exploded plan view showing the heat quantity measurement apparatus;
FIG. 5 is a cross-sectional side view showing the heat quantity measurement apparatus, in an installed state;
FIG. 6 is a side view showing an example of an observation apparatus; and
FIG. 7 is a flowchart showing an example of a piling snow depth estimation process.

### DETAILED DESCRIPTION OF THE INVENTION

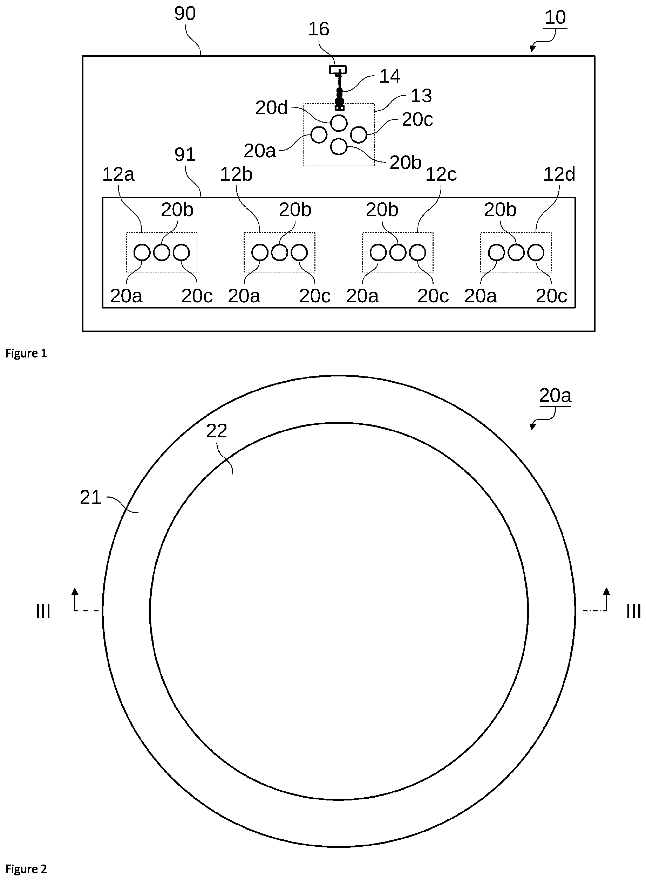

Referring to FIG. 1, a piling snow depth measurement system **10** will be described.
The piling snow depth measurement system **10** is installed, e.g., within an airport **90,** and measures a piling snow depth at a location where no equipment can be disposed above the ground, e.g., a runway **91.**
The piling snow depth measurement system **10** includes, e.g., a number of heat quantity measurement apparatuses **20a** to **20d,** a piling snow depth measurement apparatus **14,** and a control apparatus **16.**

The heat quantity measurement apparatuses **20a** to **20d** are disposed at several locations **12a** to **12d** and **13** within the airport **90.** Among them, the locations **12a** to **12d** are examples of second locations, and located within the runway **91.** Airplanes that take off from and land on the airport **90** travel on them. For this reason, no equipment can be disposed above the ground within the locations **12a** to **12d.** In contrast, the location **13** is an example of a first location, and away from the runway **91.** Thus, equipment can be disposed above the ground.

At the location **12a,** e.g. three heat quantity measurement apparatuses 20a to **20c** are disposed.
At the location **12b,** e.g., three heat quantity measurement apparatuses **20a** to **20c** are also disposed.
At the location **12c,** e.g., three heat quantity measurement apparatuses **20a** to **20c** are also disposed.
At the location **12d,** e.g., three heat quantity measurement apparatuses **20a** to **20c** are also arranged.
At the location **13,** e.g., four heat quantity measurement apparatuses **20a** to **20d** are arranged.

The piling snow depth measurement apparatus **14** is disposed near the location **13,** and measures a piling snow depth at the location **13.**
The control apparatus **16** is, e.g., a computer, and communicates with the heat quantity measurement apparatuses **20a** to **20d,** the piling snow depth measurement apparatus **14** and others, to obtain information, and estimates the piling snow depth at the locations **12a** to **12d,** based on the obtained information.

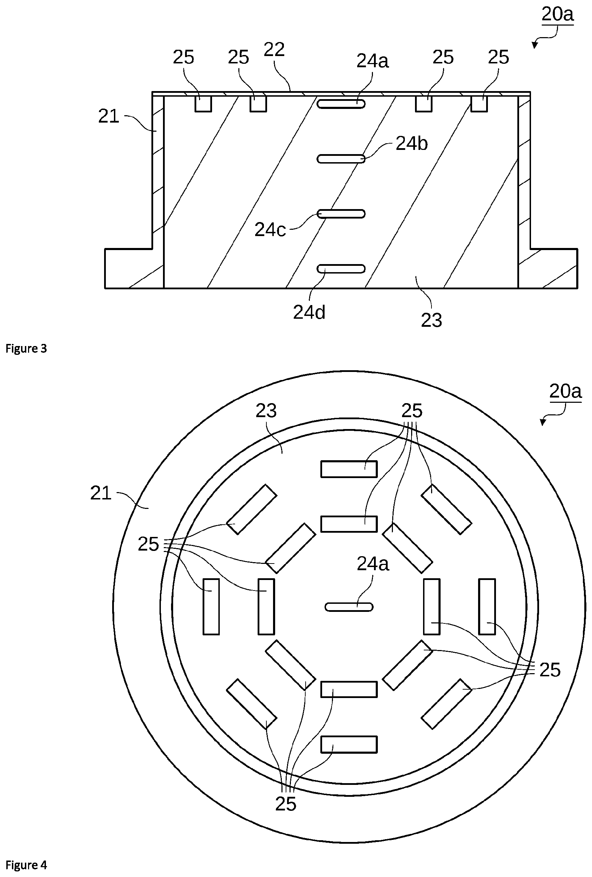

Referring to FIGS. 2 to 4, the heat quantity measurement apparatus **20a** will be described.
The heat quantity measurement apparatus **20a** heats the snow receiving plate **22** by using the heater device **25,** to maintain the temperature of the snow receiving plate **22** at a predetermined target temperature higher than 0 degrees Celsius, e.g., 1 degree Celsius.
When snow falls on the snow receiving plate **22,** the snow melts and takes heat away from the snow receiving plate **22.** Thus, the energy, or electric power, consumed by the heater device **25** is a function of the amount of snow falling on the snow receiving plate **22.**

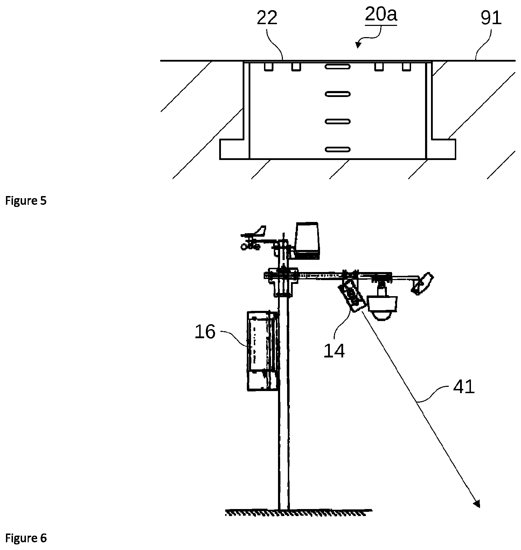

As shown in FIG. 5, the heat quantity measurement apparatus **20a** is embedded in the ground such that the upper face of the snow receiving plate **22** is at a height substantially the same as that of the surface of the runway **91.**
For example, it is installed on, and in close contact with, a roadbed below the runway **91.**
This leads the snow receiving plate **22** to be warmed by geothermal heat, in addition to the heat generated by the heater device **25.** Influence of the geothermal heat can vary depending on the locations **12a** to **12d** and **13,** which may be an error factor.
For this reason, in order to accurately evaluate the influence of the geothermal heat, the heat quantity measurement apparatus **20a** measures heat flux density caused by geothermal heat.

Returning to FIGS. 2 to 4, the description of the heat quantity measurement apparatus **20a** will be continued.
The heat quantity measurement apparatus **20a** includes, e.g., a container **21,** a snow receiving plate **22,** a filler material **23,** temperature sensor devices **24a** to **24d,** and heater devices **25.**

The container **21** has, e.g., a substantially cylindrical shape, and has a height, e.g., between 17 and 20cm.
The container **21** is preferably made of a material having a thermal conductivity that is close to that of the material constituting the runway **91.** This purposes to prevent the heat flux transferred from the ground to the surface of the runway **91** from being disturbed. However, the material is not limited to it, and may be an inexpensive one, such as a synthetic resin or others.

The snow receiving plate **22** has, e.g., a substantially disk-like shape, and has a diameter of, e.g., about 0.34m and an area of, e.g., about 0.091m², or 1/11m².
The snow receiving plate 22 is made of a material having high thermal conductivity, e.g., metal or others. This purposes to prevent temperature unevenness in the snow receiving plate **22.**
The upper face of the snow receiving plate **22** is preferably painted so as to have an emissivity substantially the same as that of the surface of the runway **91.** This purposes to replicate heat radiation on the surface of the runway **91.** The snow receiving plate **22** is disposed so as to shut an upper opening of the container **21.**

The filler material **23** is filled in the container **21.** The filler material **23** is made of a material having a thermal conductivity close to that of the material constituting the runway **91,** e.g., concrete or others. This purposes to replicate heat flux due to the geothermal heat transferred from the ground to the surface of the runway **91.**
In addition, the material of the filler material **23** needs to withstand the load applied to the snow receiving plate **22.** The compressive strength of concrete is, e.g., between 18 and 38N/mm². On the other hand, the pneumatic pressure of tires of an aircraft is between 1.2 and 1.4MPa. Therefore, when an aircraft passes over the snow receiving plate **22,** it can withstand the load applied to the snow receiving plate **22** from a tire of the aircraft.

The temperature sensor devices **24a** to **24d** are an example of heat flux density measurement apparatus, and embedded in the filler material **23.** The temperature sensor devices **24a** to **24d** sense ambient temperature.
The temperature sensor device **24a** is disposed substantially directly under the approximate center of the snow receiving plate **22,** and senses the temperature of the snow receiving plate **22.**
The temperature sensor device **24b** is disposed substantially directly below the temperature sensor device **24a** with a predetermined interval, e.g., 5cm, apart from the temperature sensor device **24a.**
The temperature sensor device **24c** is disposed substantially directly below the temperature sensor device **24b** with a predetermined interval, e.g., 5cm, apart from the temperature sensor device **24b.**
The temperature sensor device **24d** is disposed substantially directly below the temperature sensor device **24c** with a predetermined interval, e.g., 5cm, apart from the temperature sensor device **24c.**

Measuring vertical temperature profile in the filler material **23** by the vertically spacedly arranged temperature sensor devices **24a** to **24d** enables measurement of the heat flux density due to the geothermal heat or others transferred from the ground to the surface of the runway **91.**
For example, assuming that the thermal conductivity of the filler material **23** is ***λ*** [W/mK] and the temperature gradient in the filler material 23 computed based on the temperature measured by the temperature sensor device **24a** to **24d** is **dϑ** [K/m], the heat flux density J is ***λ*·dϑ** [W/m²].

The heater device **25** generates heat, e.g., by electric energy, and heats the snow receiving plate **22.** The heater device **25** is attached to a lower face of the snow receiving plate **22.** For example, eight heater devices **25** are arranged annularly around the center of the snow receiving plate **22,** and further eight heater devices **25** are arranged annularly around them.
The heater device **25** is controlled to maintain the temperature of the snow receiving plate **22** at a target temperature, e.g., 1 degrees Celsius. For example, an electric switch is provided between the heater device **25** and an electric power source that supplies electric energy to the heater device **25,** and the electric switch is turned on when the temperature of the snow receiving plate **22** is lower than the target temperature, and the electric switch is turned off when the temperature of the snow receiving plate **22** reaches the target temperature. The electric switch may be controlled based on the temperature sensed by the temperature sensor device **24a,** or may be a thermistor or other devices autonomously turned on and off.
The total heating capacity of the heater devices **25** is, e.g., 0.1kW. Assuming that the area of the snow receiving plate **22** is 0.0909m², the heating capacity per unit area is 1.1kW/m². It can completely melt falling snow as long as the falling snow is 12cm per hour or less.

The heat quantity measurement apparatus **20b** has similar configuration to the heat quantity measurement apparatus **20a,** but the target temperature of the heater device **25** is different from that in the heat quantity measurement apparatus **20a,** e.g., 3 degrees Celsius.

The heat quantity measurement apparatus **20c** also has similar configuration to the heat quantity measurement apparatuses **20a** and **20b,** but the target temperature of the heater device **25** is different from those in the heat quantity measurement apparatuses **20a** and **20b,** e.g., 5 degrees Celsius.

The heat quantity measurement apparatus **20d** also has similar configuration to the heat quantity measurement apparatuses **20a** to **20c,** but differs in the control technique of the heater device **25.**
The heat quantity measurement apparatus **20d** is provided to measure how high the snow melted in the heat quantity measurement apparatuses **20a** to **20c** would pile up if it had not been melted. For this reason, the heater device **25** of the heat quantity measurement apparatus **20d** is not controlled based on the temperature of the snow receiving plate **22,** but is controlled based on the piling snow depth of the snow piling up on the snow receiving plate **22.** That is, it is not energized until the piling snow depth reaches a predetermined threshold value, e.g., 5cm, and once the piling snow depth reaches the threshold value, it is energized until the piling snow disappears.

The heat quantity measurement apparatuses **20a** to **20d** are manufactured, e.g., as below.
First, the heater devices **25** are fixed to the lower face of the snow receiving plate **22.**
Next, the snow receiving plate **22** to which the heater device **25** is attached is fixed to the upper opening of the container **21.**
Then, the container **21** is vertically reversed, and the temperature sensor devices **24a** to **24d** are arranged in it.
Finally, fresh concrete is placed into the container **21** in which the temperature sensor devices **24a** to **24d** are arranged, and solidified to form the filler material **23.**
In order to securely fix the filler material **23** in the container **21,** it is desirable to fix, e.g., bolts or others to protrude inward from the side face of the container **21** in advance.

Referring to FIG. 6, the piling snow depth measurement apparatus **14** will be described. The piling snow depth measurement apparatus **14** measures depth of snow piling up on the snow receiving plate **22** of the heat quantity measurement apparatus **20d** at the location **13.** The piling snow depth measurement apparatus **14** includes, e.g., a laser distance measurement device disposed above the heat quantity measurement apparatus **20d.** The laser distance measurement device irradiates laser beam **41** toward the center of the snow receiving plate **22** of the heat quantity measurement apparatus **20d,** to measure the distance to the snow receiving plate **22** or the surface of the snow piling up on it, and thereby to measure the depth of the snow piling up on the snow receiving plate **22.**

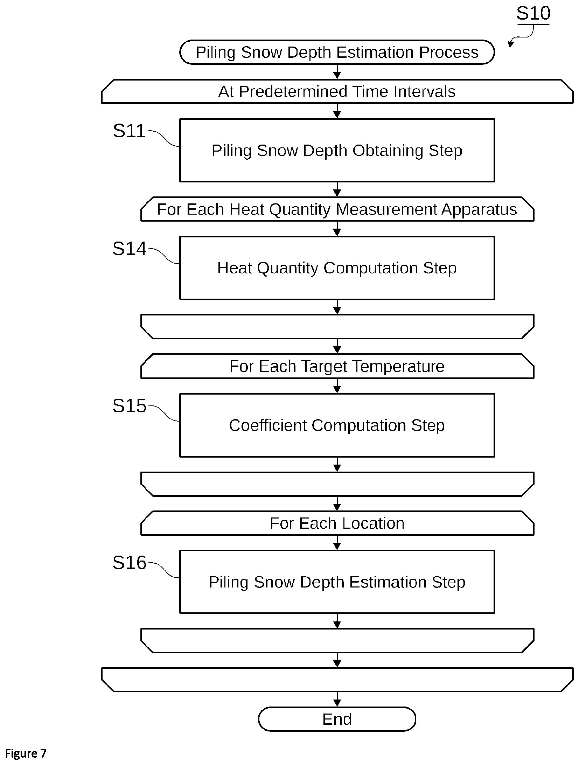

Referring to FIG. 7, a piling snow depth estimation process **S10** will be described. The control apparatus **16** estimates the piling snow depths at the locations **12a** to **12d,** e.g., by performing the piling snow depth estimation process **S10.**

The piling snow depth estimation process **S10** includes, e.g., a piling snow depth obtaining step **S11,** a heat quantity computation step **S14,** a coefficient computation step **S15,** and a piling snow depth estimation step **S16.**

In the piling snow depth estimation process **S10,** the piling snow depth obtaining step **S11** to the piling snow depth estimation step **S16** are repeated at predetermined time intervals, e.g., 10 minutes.
First, in the piling snow depth obtaining step **S11,** the control apparatus **16** obtains the piling snow depth at the location **13** measured by the piling snow depth measurement apparatus **14,** and computes an increment **Δ*h*₁** of the piling snow depth in the observation target period, e.g., 10 minutes.

Next, for each of the heat quantity measurement apparatuses **20a** to **20c** at the locations **12a** to **12d** and **13,** the control apparatus **16** estimates the quantity of heat ***Qᵢⱼ*** spent to melt the snow falling on the snow receiving plate **22,** in the heat quantity computation step **S14.** Note that ***i*** is an index representing a location, ***i** =* 1 represents the location **13,** ***i** =* 2 represents the location **12a,** ***i** =* 3 represents the location **12b, *i* =** 4 represents the location **12c,** and ***i** =* 5 represents the location **12d;** and that ***j*** is an index representing a target temperature.
For example, a quantity of heat ***Q*_{G}** given to the snow receiving plate **22** from the heater device **25** during the observation target period is computed based on the electric power consumed by the heater device **25.**
Further, a quantity of heat ***Q*_{C}** given to the snow receiving plate **22** due to geothermal heat or others during the observation target period is computed from the heat flux density computed based on the temperature gradient measured by the temperature sensor devices **24a** to **24d.**
Then, a total sum ***Q*_{G}** + ***Q*_{C}** of the computed quantity of heat ***Q*_{G}** and quantity of heat ***Q*_{C}** is calculated as the quantity of heat ***Qᵢⱼ*.**

Next, for each of the target temperatures, the control apparatus **16** estimates a coefficient of a piling snow depth estimation expression, in the coefficient computation step **S15.**
The larger amount of snow falls on the snow receiving plate **22,** the more quantity of heat ***Qᵢⱼ*** is spent to melt it. Therefore, there is a correlation between the increment of the piling snow depth **Δ*hᵢⱼ*** and the quantity of heat ***Qᵢⱼ*.** For example, assuming that a proportional relation exists between the increment of the piling snow depth **Δ*hᵢⱼ*** and the quantity of heat ***Qᵢⱼ*,** the piling snow depth estimation expression is **Δ*****hᵢⱼ** = **kⱼ Qᵢⱼ.***
The control apparatus **16** computes the coefficient of the piling snow depth estimation expression, based on the quantity of heat ***Q*_{1*j*}** computed in the heat quantity computation step **S14** for the heat quantity measurement apparatuses **20a to 20c** at the location **13,** and the increment of the piling snow depth **Δ*h*₁** at the location **13** computed in the piling snow depth obtaining step **S11.** For example, in a case that the piling snow depth estimation expression is **Δ*hᵢⱼ = kⱼ Qᵢⱼ, kⱼ =* Δ*h*₁ / *Q*_{1*j*}** is derived from substituting the quantity of heat ***Q*_{1*j*}** and the increment **Δ*h*₁** of the piling snow depth into this expression and solving it for ***kⱼ.*** The control apparatus **16** computes the coefficient ***kⱼ*** by calculating this value.

Finally, for each of the locations **12a** to **12d,** the control apparatus **16** estimates the piling snow depth ***hᵢ*,** in the piling snow depth estimation step **S16.**
For example, the control apparatus **16** computes an increment of the piling snow depth **Δ*hᵢⱼ*** by substituting the quantity of heat ***Qᵢⱼ*** computed in the heat quantity computation step **S14** and the coefficient of the piling snow depth estimation expression computed in the coefficient computation step **S15** into the piling snow depth estimation expression, and computes the piling snow depth ***hᵢ*** by accumulating the computed increment **Δ*hᵢⱼ*.** For example, in the case that the piling snow depth estimation expression is **Δ*****hᵢⱼ** = **kⱼ Qᵢⱼ,*** the increment **Δ*hᵢⱼ*** is computed by calculating a value obtained by substituting the quantity of heat ***Qᵢⱼ*** and the coefficient ***kⱼ*** into this expression.
Since three heat quantity measurement apparatuses **20a to 20c** exist at each location **12a** to **12d,** three increments **Δ*hᵢⱼ*** are computed for each location. For example, an average value of the three computed increments **Δ*hᵢⱼ*** is calculated as an increment **Δ*hᵢ*** at the location, and it is accumulated to get the piling snow depth ***hᵢ*.** Alternatively, three piling snow depths ***hᵢⱼ*** may be computed by separately accumulating the three computed increments **Δ*hᵢⱼ*,** and an average value of them may be used as the piling snow depth ***hᵢ*** at the location.

As described above, the heat quantity measurement apparatuses **20a** to **20c** embedded in the runway **91** maintains the snow receiving plates **22** at the target temperature, and the quantity of heat spent to melt the snow falling on the snow receiving plates **22** is computed based on the energy consumed by the heater devices **25** and the quantity of heat caused by the geothermal heat or others supplied to the snow receiving plates **22.**
The actual piling snow depth at a location where the equipment can be disposed above the ground is measured to estimate the relation between the piling snow depth and the computed quantity of heat. This enables accurate estimation of the piling snow depth at a location within the runway **91.**
The heat quantity measurement apparatuses **20a** to **20c** are installed at a plurality of locations within the runway **91.** This enables estimation of the piling snow depths at a plurality of locations.

Note that the piling snow depth estimation expression is not limited to the above-described one, and may be other expressions. For example, it may be one considering quantity of solar radiation heat, quantity of solar reflection heat, quantity of atmospheric radiation heat, quantity of upward long-wave radiation heat, quantity of sensible heat by wind, quantity of sensible heat by rainfall or snowfall, quantity of latent heat by evaporation, quantity of side loss heat, and/or others. In this case, these quantities of heat may be actually measured, or estimated from air temperature, relative humidity, wind speed and/or other weather conditions, by actually measuring the weather conditions. This enables more accurate estimation of the piling snow depth.

On the other hand, Using the estimation expression **Δ*****hᵢⱼ** = **kⱼ Qᵢⱼ*** in the above-described example doesn't require actual measurement of weather conditions or others, and thus enables reduction of the equipment cost. Experimental results demonstrate that the estimation using this estimation expression can obtain sufficient accuracy for practical use.

In addition, instead of separately finding out a coefficient of the piling snow depth estimation expression for each of the target temperatures, a coefficient of a piling snow depth estimation expression common to all the target temperatures may be found out.
For example, **Δ*hᵢ = k* (*Qᵢⱼ + p Tⱼ + q*)** is used as the piling snow depth estimation expression. Here, ***k, p*** and ***q*** represent coefficients, and ***Tⱼ*** represents a target temperature. (***p Tⱼ + q***) represents the quantity of heat applied to the snow receiving plate **22** due to the effect of weather conditions or other factors other than the quantity of heat ***Q*_{G}** from the heater device **25,** the quantity of heat ***Q*_{C}** from geothermal heat or others. Among them, ***p Tⱼ*** represents a component that varies depending on the target temperature, and ***q*** represents a constant component regardless of the target temperature. These are assumed to be the same for all the heat quantity measurement apparatuses **20a** to **20c** at all the locations **12a** to **12d** and **13.** Then, using not only the increment **Δ*h*₁** of the piling snow depth measured for the location **13** and the quantity of heat ***Q*_{1*j*}** computed for the heat quantity measurement apparatus **20a** to **20c** at the location **13,** but also the quantities of heat ***Qᵢⱼ*** computed for the heat quantity measurement apparatuses **20a** to **20c** at the locations **12a** to **12d,** the coefficient ***k, p*** and ***q*** is found out by the least squares method or others. In such cases, the computed coefficients ***k, p*** and ***q*** may be used to compute the increments of the piling snow depth **Δ*hᵢ*** at each location **12a** to **12d.** Or, the increments **Δ*hᵢ*** of the piling snow depth simultaneously found out in the process of finding out the coefficient ***k, p*** and ***q*** by the least squares method or others may be used as it is, to estimate the piling snow depth ***hᵢ*.**

The embodiments described above are examples for facilitating understanding of the present invention. The present invention is not limited thereto and the invention is defined by the appended claims. This can be easily understood by those skilled in the art from the above description.

For example, the piling snow depth measurement system may measure the piling snow depth at any location, which is not limited to a runway of an airport, but where it is difficult to install equipment above the ground and to directly measure the piling snow depth.

### REFERENCE SIGNS LIST

**10:** piling snow depth measurement system; **12a** to **12d** and **13:** location; **14:** piling snow depth measurement apparatus; **16:** control apparatus; **20a** to **20d:** heat quantity measurement apparatus; **21:** container; **22:** snow receiving plate; **23:** filler material; **24a** to **24d:** temperature sensor device; **25:** heater device; **41:** laser beam; **90:** airport; **91:** runway; **S10:** piling snow depth estimation process; **S11:** piling snow depth obtaining step; **S14:** heat quantity computation step; **S15:** coefficient computation step; and, **S16:** piling snow depth estimation step.

## Claims

1. A piling snow depth measurement system (10), comprising:
at least two heat quantity measurement apparatuses (20a-d);
a piling snow depth measurement apparatus (14); and
a control apparatus (16),
wherein each of the heat quantity measurement apparatuses includes:
a snow receiving plate (22) configured that falling snow piles up thereon;
a heater device (25) configured to heat the snow receiving plate until temperature of the snow receiving plate becomes a predetermined target temperature exceeding 0 degrees Celsius; and
a heat flux density measurement apparatus (24a-d) configured to measure heat flux density transmitted from below to the snow receiving plate,
wherein a first heat quantity measurement apparatus of the heat quantity measurement apparatuses is installed within a first location (13),
wherein a second heat quantity measurement apparatus of the heat quantity measurement apparatuses is installed within a second location (12a-d),
wherein the piling snow depth measurement apparatus measures a piling snow depth of snow piling up at the first location,
wherein the control apparatus computes a quantity of heat spent to melt snow falling on the snow receiving plate for each of the heat quantity measurement apparatuses, based on energy consumed by the heater device and a heat flux density measured by the heat flux density measurement apparatus, and
wherein the control apparatus estimates a piling snow depth at the second location, based on the computed quantity of heat and the piling snow depth measured by the piling snow depth measurement apparatus.

2. The piling snow depth measurement system of claim 1,
wherein the snow receiving plate is embedded in a ground so as to be at a height substantially the same as that of a ground surface therearound.

3. The piling snow depth measurement system of Claim 1 or 2, further comprising a third heat quantity measurement apparatus and a fourth heat quantity measurement apparatus,
wherein the snow receiving plate of the third heat quantity measurement apparatus is installed within the first location,
wherein the snow receiving plate of the fourth heat quantity measurement apparatus is installed in the second location, and
wherein the control apparatuses of the third and fourth heat quantity measurement apparatuses control the heater device until temperatures of the snow receiving plates become a second target temperature different from the target temperature of the first and second heat quantity measurement apparatus.

4. The piling snow depth measurement system of Claim 1 or 2,
wherein the second location is within a runway of an airport, and
wherein the first location is within the airport but other than a runway.

5. The piling snow depth measurement system of Claim 1 or 2,
wherein the control apparatus computes, as the quantity of heat spent to melt the snow falling on the snow receiving plate, a total sum of a quantity of heat from energy consumed by the heater device within a predetermined period of time, and a quantity of heat transmitted from the heat flux density measured by the heat flux density measurement apparatus to the snow receiving plate within the predetermined period of time.

6. The piling snow depth measurement system of Claim 1 or 2,
wherein the control apparatus computes, as an increment **Δ*h*₂** of the piling snow depth at the second location for a predetermined period of time, **Δ*h*₁·*Q*₂** / ***Q*₁** based on the quantity of heat ***Q*₁** computed for the first heat quantity measurement apparatus, an increment **Δ*h*₁** of the piling snow depth measured by the piling snow depth measurement apparatus for the predetermined period, and the quantity of heat ***Q*₂** computed for the second heat quantity measurement apparatus.

## Patentansprüche

1. Schneehöhenmesssystem (10), umfassend:
mindestens zwei Wärmemengenmessvorrichtungen (20a-d);
eine Schneehöhenmessvorrichtung (14); und
eine Steuervorrichtung (16),
wobei jede der Wärmemengenmessvorrichtungen umfasst:
eine Schneeaufnahmeplatte (22), die derart ausgestaltet ist, dass sich darauf fallender Schnee ansammelt;
eine Heizvorrichtung (25), die dazu ausgestaltet ist, die Schneeaufnahmeplatte zu erwärmen, bis die Temperatur der Schneeaufnahmeplatte eine vorbestimmte Zieltemperatur erreicht, die 0 Grad Celsius überschreitet; und
eine Wärmestromdichte-Messvorrichtung (24a-d), die dazu ausgestaltet ist, eine von unten zur Schneeaufnahmeplatte übertragene Wärmestromdichte zu messen,
wobei eine erste Wärmemengenmessvorrichtung der Wärmemengenmessvorrichtungen innerhalb eines ersten Bereichs (13) installiert ist,
wobei eine zweite Wärmemengenmessvorrichtung der Wärmemengenmessvorrichtungen innerhalb eines zweiten Bereichs (12a-d) installiert ist,
wobei die Schneehöhenmessvorrichtung eine Schneehöhe des sich im ersten Bereich ansammelnden Schnees misst,
wobei die Steuervorrichtung für jede der Wärmemengenmessvorrichtungen auf Grundlage der von der Heizvorrichtung verbrauchten Energie und einer von der Wärmestromdichte-Messvorrichtung gemessenen Wärmestromdichte eine Wärmemenge berechnet, die zum Schmelzen des auf die Schneeaufnahmeplatte fallenden Schnees aufgewendet wird, und
wobei die Steuervorrichtung auf Grundlage der berechneten Wärmemenge und der von der Schneehöhenmessvorrichtung gemessenen Schneehöhe eine Schneehöhe im zweiten Bereich schätzt.

2. Schneehöhenmesssystem nach Anspruch 1,
wobei die Schneeaufnahmeplatte derart in einen Boden eingebettet ist, dass sie sich auf einer Höhe befindet, die im Wesentlichen derjenigen einer sie umgebenden Bodenoberfläche entspricht.

3. Schneehöhenmesssystem nach Anspruch 1 oder 2, ferner umfassend eine dritte Wärmemengenmessvorrichtung und eine vierte Wärmemengenmessvorrichtung,
wobei die Schneeaufnahmeplatte der dritten Wärmemengenmessvorrichtung innerhalb des ersten Bereichs installiert ist,
wobei die Schneeaufnahmeplatte der vierten Wärmemengenmessvorrichtung in dem zweiten Bereich installiert ist, und
wobei die Steuervorrichtungen der dritten und vierten Wärmemengenmessvorrichtung die Heizvorrichtung steuern, bis die Temperaturen der Schneeaufnahmeplatten eine zweite Zieltemperatur erreichen, die von der Zieltemperatur der ersten und zweiten Wärmemengenmessvorrichtung verschieden ist.

4. Schneehöhenmesssystem nach Anspruch 1 oder 2,
wobei sich der zweite Bereich innerhalb einer Start- und Landebahn eines Flughafens befindet, und
wobei sich der erste Bereich innerhalb des Flughafens, jedoch außerhalb einer Start- und Landebahn befindet.

5. Schneehöhenmesssystem nach Anspruch 1 oder 2,
wobei die Steuervorrichtung als die zum Schmelzen des auf die Schneeaufnahmeplatte fallenden Schnees aufgewendete Wärmemenge eine Gesamtsumme aus einer Wärmemenge aus der innerhalb eines vorbestimmten Zeitraums von der Heizvorrichtung verbrauchten Energie und einer Wärmemenge berechnet, die aufgrund der von der Wärmestromdichte-Messvorrichtung gemessenen Wärmestromdichte innerhalb des vorbestimmten Zeitraums zur Schneeaufnahmeplatte übertragen wird.

6. Schneehöhenmesssystem nach Anspruch 1 oder 2,
wobei die Steuervorrichtung als eine Zunahme Δh₂ der Schneehöhe im zweiten Bereich für einen vorbestimmten Zeitraum Δh₁·Q₂/Q₁ berechnet, und zwar auf Grundlage der für die erste Wärmemengenmessvorrichtung berechneten Wärmemenge Q₁, einer von der Schneehöhenmessvorrichtung für den vorbestimmten Zeitraum gemessenen Zunahme Δh₁ der Schneehöhe und der für die zweite Wärmemengenmessvorrichtung berechneten Wärmemenge Q₂.

## Revendications

1. Système de mesure de profondeur de neige (10), comprenant :
au moins deux dispositifs de mesure de quantité de chaleur (20a-d) ;
un dispositif de mesure de profondeur de neige (14) ; et
un dispositif de commande (16),
dans lequel chacun des dispositifs de mesure de quantité de chaleur comprend :
une plaque de collecte de neige (22) configurée de manière que la neige tombante s'y accumule ;
un dispositif de chauffage (25) configuré pour chauffer la plaque de collecte de neige jusqu'à ce que la température de la plaque de collecte de neige atteigne une température cible prédéterminée supérieure à 0 degré Celsius ; et
un dispositif de mesure de densité de flux de chaleur (24a-d) configuré pour mesurer une densité de flux de chaleur transmise depuis le dessous vers la plaque de collecte de neige,
dans lequel un premier dispositif de mesure de quantité de chaleur parmi les dispositifs de mesure de quantité de chaleur est installé à un premier emplacement (13),
dans lequel un second dispositif de mesure de quantité de chaleur parmi les dispositifs de mesure de quantité de chaleur est installé à un second emplacement (12a-d),
dans lequel le dispositif de mesure de profondeur de neige mesure la profondeur de neige accumulée au premier emplacement,
dans lequel le dispositif de commande calcule, pour chacun des dispositifs de mesure de quantité de chaleur, une quantité de chaleur utilisée pour faire fondre la neige tombant sur la plaque de collecte de neige, sur la base de l'énergie consommée par le dispositif de chauffage et d'une densité de flux de chaleur mesurée par le dispositif de mesure de densité de flux de chaleur, et dans lequel le dispositif de commande estime une profondeur de neige au second emplacement sur la base de la quantité de chaleur calculée et de la profondeur de neige mesurée par le dispositif de mesure de profondeur de neige.

2. Système de mesure de profondeur de neige selon la revendication 1, dans lequel la plaque de collecte de neige est encastrée dans le sol de manière à se trouver à une hauteur sensiblement identique à celle de la surface du sol qui l'entoure.

3. Système de mesure de profondeur de neige selon la revendication 1 ou 2, comprenant en outre un troisième dispositif de mesure de quantité de chaleur et un quatrième dispositif de mesure de quantité de chaleur,
dans lequel la plaque de collecte de neige du troisième dispositif de mesure de quantité de chaleur est installée au premier emplacement,
dans lequel la plaque de collecte de neige du quatrième dispositif de mesure de quantité de chaleur est installée au second emplacement, et
dans lequel les dispositifs de commande des troisième et quatrième dispositifs de mesure de quantité de chaleur commandent le dispositif de chauffage jusqu'à ce que les températures des plaques de collecte de neige atteignent une seconde température cible différente de la température cible des premier et second dispositifs de mesure de quantité de chaleur.

4. Système de mesure de profondeur de neige selon la revendication 1 ou 2, dans lequel le second emplacement se trouve sur une piste d'un aéroport, et dans lequel le premier emplacement se trouve dans l'aéroport, mais ailleurs que sur une piste.

5. Système de mesure de profondeur de neige selon la revendication 1 ou 2, dans lequel le dispositif de commande calcule, en tant que quantité de chaleur utilisée pour faire fondre la neige tombant sur la plaque de collecte de neige, une somme totale d'une quantité de chaleur provenant de l'énergie consommée par le dispositif de chauffage au cours d'une période prédéterminée et d'une quantité de chaleur transmise, à partir de la densité de flux de chaleur mesurée par le dispositif de mesure de densité de flux de chaleur, à la plaque de collecte de neige au cours de la période prédéterminée.

6. Système de mesure de profondeur de neige selon la revendication 1 ou 2, dans lequel le dispositif de commande calcule, en tant qu'incrément Δh₂ de la profondeur de neige au second emplacement pour une période prédéterminée, Δh₁·Q₂/Q₁ sur la base de la quantité de chaleur Q₁ calculée pour le premier dispositif de mesure de quantité de chaleur, d'un incrément Δh₁ de la profondeur de neige mesuré par le dispositif de mesure de profondeur de neige pour la période prédéterminée, et de la quantité de chaleur Q₂ calculée pour le second dispositif de mesure de quantité de chaleur.
